# NEUE EUROPÄISCHE PATENTSCHRIFT

(11) **EP 0 877 866 B2**
(45) Veröffentlichungstag und Bekanntmachung des Hinweises auf die Entscheidung über den Einspruch: **01.09.2004**
(45) Hinweis auf die Patenterteilung: 20.10.1999
(21) Anmeldenummer: 97914108.2
(22) Anmeldetag: 28.01.1997
(51) Int. Cl.: F16C 33/10

(54) **GLEITLAGERELEMENT MIT SCHMIERÖLTASCHEN**
SLIDING BEARING ELEMENT WITH LUBRICATING OIL POCKETS
ELEMENT DE PALIER LISSE MUNI DE POCHES D'HUILE LUBRIFIANTE

(30) Priorität: 30.01.1996 DE 19603170; 08.01.1997 DE 19700339
(43) Veröffentlichungstag der Anmeldung: 18.11.1998
(73) Patentinhaber: Federal-Mogul Wiesbaden GmbH & Co.KG, 65201 Wiesbaden (DE)
(72) Erfinder: NIEGEL, Fritz, D-65375 Oestrich-Winkel (DE); HOPPE-BOEKEN, Peter-Clemens, D-74906 Bad Rappenau (DE); SCHOPF, Eckhart, D-65187 Wiesbaden (DE)
(74) Vertreter: Fuchs Mehler Weiss & Fritzsche
(86) Internationale Anmeldenummer: PCT/DE1997/000194
(87) Internationale Veröffentlichungsnummer: WO 1997/028379

(56) Entgegenhaltungen:
- EP-A- 0 104 159
- EP-A- 0 523 739
- DE-A- 2 711 983
- DE-A- 3 326 316
- DE-A- 3 621 577
- DE-A- 4 125 165
- DE-C- 834 480
- DE-C- 2 000 632
- DE-U- 7 817 118
- US-A- 3 976 342
- US-A- 5 238 311
- DIN 1494, Teil 3 1983
- DIN 1494, TEIL 4 1983
- GLYO, Konstruction Gerollte Lagerbuschsen Kugelkalotten Blatt-Nr 611
- Prospekt er Fa INA Wälzlager Schaffler KG Permaglide - Gleitlage INA 703
- GLYCO-Ingenieurbericht Nr 8/67 - Dreistofflager aus GLYCO-40
- Firmenschrfite der Fa. Kolbenschmidt AG "KS Gleitlager, Gerollte Buchsen und Anlaufscheiben aus Massiv-und Stahlverbundwerkstoffen
- INA Technische Produktinformation, Schmieröle und Schmierfette für Eälzlager, Seiten 51 bis 59
- DIN-Taschenbuch , Gleitlager 2 , Werkstoffe Prüfung, Berechnung Begriffe, Beuth 1991, Seite 57

## Beschreibung

Die Erfindung betrifft eine Verwendung von Gleitlagerschalen, Bundlager, und Anlaufscheiben, die einen einschichtigen oder mehrschichtigen, metallischen Lagerwerkstoff aufweisen wobei die Gleitfläche Schmieröltaschen aufweist.

Die Lauffläche mit Vertiefungen zu versehen, ist seit vielen Jahren bekannt. So wird in der DE-PS 546 781 zur Verhinderung der "Berührungsoxidation" vorgeschlagen, in eine der sich berührenden Flächen eines Lagers Unterbrechungen, Vertiefungen, Aufrauhungen und dgl. einzubringen. Es werden in diesem Zusammenhang auch kreisförmige Vertiefungen gezeigt, jedoch wird nicht angegeben, wie diese Vertiefungen dimensioniert, angeordnet oder ausgekleidet sind.

Die DE-PS 834 480 beschreibt ein Lager, bei dem die Lageroberfläche aus einer Vielzahl kleiner Flächen aus hartem und weichem Lagermaterial besteht. Außer rillenförmigen Vertiefungen sind quadratische Ausnehmungen vorgesehen, die jedoch vollständig mit weichem Lagermaterial ausgefüllt sind. Die Vertiefungen werden mittels einer sich in einem Metallbad drehenden Prägewalze eingebracht.

Aus der DE-OS 27 11 983 ist ein Lager bekannt, das zusätzlich zu Ölnuten halbkugelförmige Ölausnehmungen mit einem Durchmesser von 1,5 - 2,5 mm aufweist, die in Abständen von 4 mm in Umfangsrichtung bzw. 4,8 mm in axialer Richtung angeordnet sind. Da die Lagerlegierung nur eine Dicke von 0,25 mm besitzt, erstrecken sich diese Olausnehmungen bis in die Stahlstützschale. Diese derart dimensionierten Schmieröltaschen haben u.a. den Nachteil, daß der Bindungsbereich der Lagerlegierung mit der Stahlstützschale frei liegt, so daß in diesem Bereich Ablösungen auftreten können.

Aus der DE 33 26 316 C2 sind Sintermetallagerbuchsen mit auf der innenliegenden Laufoberfläche angeordneten Schmiertaschen bekannt, die halbkugelförmig oder ellipsoidförmig ausgebildet sind. Die Tiefe der Schmieröltaschen liegt bei 0,2 - 1 mm, wobei 10 - 30% der gesamten Lauffläche von den Schmieröltaschen eingenommen werden.

Die AU 143,992 zeigt einen Gleitflächenaufbau mit eingeprägten Ausnehmungen, die mit weichem Gleitlagermaterial vollständig ausgefüllt sind.

Die DE-GM 7817118 beschreibt ein selbstschmierendes Lager, das zum Zwecke der Einbettung eines Feststoffschmiermittels Hohlräume mit kreisförmiger oder kugelförmiger Gestalt aufweist.

Aus der US 5,462,362 ist ein Gleitelement bekannt, das für extrem niedrige Gleitgeschwindigkeiten eingesetzt wird, wie zum Beispiel als Kugelelemente bei künstlichen Gelenken. Die Gleitoberfläche besitzt zylindrische Ausnehmungen mit Durchmessern von 0,2 bis 0,8 mm und einer Tiefe von 1 bis 10 µm. Die Ausnehmungen werden ebenfalls mit Feststoffschmiermittel gefüllt.

Diese bekannten Lagerelemente können je nach Lagerwerkstoff nur bei niedrigen Gleitgeschwindigkeiten bis ca. 5m/s und mittleren Belastungen bis ca. 30 MPa eingesetzt werden. Die Lagerelemente sind für die Anwendung als Pleuellager und Hauptlager in Verbrennungsmotoren ungeeignet, weil durch die relativ große Tiefe und/oder dem großen Flächenanteil der Schmieröltaschen der Aufbau des für diese Anwendungen erforderlichen hydrodynamischen Drucks nicht in ausreichendem Maße möglich ist.

Bekannt sind außerdem Lagerelemente gemäß EP-PS 104159 und US 5,238.311 mit rillenförmigen Ausnehmungen der Gleitfläche von 3 bis 6µm Tiefe. Diese haben jedoch den Nachteil, daß die Rillen unter den in Pleuellagern und Hauptlagern von Verbrennungsmotoren üblichen Belastungen über 30 MPa entweder plastisch deformiert oder verschlissen werden und zu Fressern führen können, so daß sie ihre Aufgabe nicht mehr erfüllen können.

Die in EP-PS 57808 beschriebenen Rillenlager mit durch weiche Lagerwerkstoffe gefüllten Rillen weisen erfahrungsgemäß den Nachteil auf, daß nach einer gewissen Betriebszeit der weiche Lagerwerkstoff durch das Schmieröl herausgespült wird und die Lager nicht mehr funktionsfähig sind.

Aus der Produkt spezifikation Lagerbuchse KS 1210Bz, Art Nr. 742 44500 sowie AN.00, Blatt 11, Seite 1 sind Buchsen mit seichten Taschen der Tiete 0,2-0,4 mm bekannt.

Es ist daher Aufgabe der Erfindung, Gleitlagerelemente mit Schmieröltaschen so weit zu verbessern, daß sie hinsichtlich ihrer Laufeigenschaften besser sind als die bekannten Gleitlagerelemente mit Schmieröltaschen und daß sie die Eigenschaften sowohl der Lager mit offenen als auch mit gefüllten Rillen und die der Lager ohne Schmieröltaschen deutlich übertreffen.

Diese Aufgabe wird mit einer Verwendung gemäß den Merkmalen des Patentanspruchs 1 gelöst. Vorteilhafte Ausgestaltungen sind Gegenstand der Unteransprüche.

Eine Vielzahl von Versuchen mit Schmieröltaschen mit unterschiedlichsten Geometrien, wie sie aus dem Stand der Technik bekannt sind, hatten keine signifikanten Verbesserungen des Betriebsverhaltens gezeigt, so daß über die Wahl der Dimensionierung keine Vorteile zu erwarten waren. Da Schmieröltaschen üblicherweise den Tragflächenanteil des Gleitlagerelements vermindern, müssen Schmieröltaschen diesbezüglich als nachteilig angesehen werden.

Um so überraschender war es, daß die Gleitlagerelemente bei einer geringen Tiefe der Schmieröltaschen nach anspruch 1 unter den für Pleuellager und Hauptlager von Verbrennungsmotoren üblichen Betriebsbedingungen bei Verwendung üblicher Schmierstoffe wie Motorenöle nach SAE ein hervorragendes Betriebsverhalten zeigen. Die Eigenschaften der Gleitlagerelemente können werden optimiert wenn der Zusammenhang zwischen der Schmieröltaschendimensionierung und der Viskosität des verwendeten Schmierstoffs beachtet wird. Vorteilhafterweise sollte die Tiefe der Schmieröltaschen bei Lagern von Verbrennungsmotoren bei T = 0,5 e^{a} bis T = e^{a}, mit a = 0,45.1n_{η}-3 betragen, wobei sich T in mm ergibt, wenn die dynamische Viskosität η des Schmierstoffs bei Betriebstemperatur in mPas eingesetzt wird. Diese Formel gilt für Betriebsviskositäten von η = 1,8 mPas bis 50 mPas, was bei Verwendung von üblichen Motorölen Temperaturen von etwa 60°C bis 180°C entspricht (O.R. Lang, W. Steinhilper "Gleitlager", 1978, Springer-Verlag, S. 36). Nur bei Einhaltung dieser Dimensionierung füllen sich die Schmieröltaschen vollständig mit Schmierstoff, so daß sich in Verbindung mit der bis auf die Gleitfläche allseitig geschlossenen, eng begrenzten Tasche im Betrieb offensichtlich ein hydrodynamischer Druck wie über der glatten Gleitfläche gegenüber dem Gleitpartner aufbauen kann und somit überraschend ein Beitrag zum Traganteil geliefert wird.

In jedem Fall muß die Taschentiefe geringer sein als die Dicke der Lagermetallschicht, in welche die Schmieröltaschen eingebracht sind.

Diese Dimensionierung der Schmieröltaschen gilt vorzugsweise für Lagerelemente mit einem Lagerdurchmesser von 35 bis 160mm. Die Tiefe der Schmieröltaschen liegt vorzugsweise in der Größenordnung des Spiels der Gleitpartner.

Die Belastung wird nicht nur von den Tragflächen zwischen den Schmieröltaschen aufgenommen sondern auch vom Schmierstoff in den Schmieröltaschen, so daß die Schmieröltaschen nicht wie beim Stand der Technik nur für die Schmierstoffversorgung dienen. Es können dadurch Gleitgeschwindigkeiten von >20 m/s und Belastungen von mehr als 50 MPa bei Aluminiumlegierungen und mehr als 70 MPa bei Bronzen mit Galvanikschichten ohne Probleme realisiert werden. Es werden auch die Notlaufeigenschaften verbessert, weil selbst dann, wenn die Tragflächen trokkenlaufen sollten, der Schmierstoff in den Taschen zum hydrodynamischen Tragen beiträgt. Insgesamt werden auch die Reibungsverluste deutlich verringert.

Gerade auch im Vergleich zu Lagern mit offenen, nicht mit weichem Lagermaterial aufgefüllten Rillen (US 4,538,929) sind die erfindungsgemäßen Gleitlagerelemente insofern überlegen, als daß der Schmierstoff in den Schmieröltaschen in Umfangsrichtung nicht ausweichen kann, wie dies bei Rillen der Fall ist, sondern in den Schmieröltaschen gespeichert ist und nur über den dünnen Schmierspalt ein Zufluß und Abfluß des Schmierstoffes erfolgt. Dabei entwickelt sich zusätzlich zum hydrodynamischen Druck noch eine Druckkomponente infolge der Diffusorwirkung am Eintritt des Schmierstoffs in die Schmiertasche, während sich am Austritt eine Druckkomponente durch den Staurand ergibt.

Die Fläche aller Schmieröltaschen sollte vorteilhafterweise zusammen 10% der gesamten Gleitfläche des Gleitlagerelementes nicht überschreiten, weil anderenfalls der ungestörte Tragflächenanteil zu gering wäre, um den hohen Belastungen in modernen Verbrennungs-Motoren standhalten zu können.

Die Schmieröltaschen müssen nicht unbedingt alle dieselbe Tiefe aufweisen. Es kann durchaus empfehlenswert sein, für besondere Anwendungen die Tiefe der Schmieröltaschen im Bereich der größten Belastung bzw. kleinster Schmierfilmdicken zur Verbesserung der Schmierölversorgung entsprechend größer zu wählen und zum Bereich zunehmender Schmierfilmdicken hin die Tiefe der Schmieröltaschen kontinuierlich zurückzunehmen. Insbesondere bei Pleuellagem und Hauptlagern sind deren höchstbelastete und am stärksten verschleißgefährdete Stellen bekannt, so daß ein maßgeschneidertes Gleitlagerelement geschaffen werden kann.

In Fällen von Mangelschmierung kann auch der umgekehrte Fall Vorteile bringen, d.h. die tieferen Schmieröltaschen werden im nicht belasteten Bereich angeordnet, um dadurch ein zusätzliches Ölreservoir zur Verfügung zu stellen.

Die Schmieröltaschen sind vorzugsweise in den Lagerwerkstoff eingeprägt. Die Bearbeitung wird vorzugsweise am Band vorgenommen, was weitaus einfacher ist, als das Einbringen von Rillen in die bereits umgeformte Lagerschale. Nach dem Prägen der Schmieröltaschen wird das bandförmige Material umgeformt und anschließend in der Gleitfläche fertig bearbeitet.

Der Lagerwerkstoff, in den die Schmieröltaschen eingebracht werden, ist bezüglich Belastbarkeit vorteilhafterweise eine relativ harte Legierung auf Aluminium- oder Kupfer-Basis. Solche Lagerwerkstoffe sind hoch belastbar und besitzen den Vorteil, daß sie unmittelbar auf den Stahlträger aufbringbar sind. Wegen der relativ hohen Freßneigung solcher harter Lagerwerkstoffe konnten diese ohne zusätzliche Gleitschicht bisher nur bei niedrigen Gleitgeschwindigkeiten eingesetzt werden. Um der Freßneigung entgegenzuwirken, hatte man in der Vergangenheit neben zusätzlicher Beschichtung versucht, mehr Zinn bzw. Blei den Legierungen zuzugeben. Es hat sich nun gezeigt, daß durch die Ausbildung der erfindungsgemäßen Schmieröltaschen auf die Zugabe dieser weichen Metalle weitgehend verzichtet werden kann. Darüber hinaus hat sich gezeigt, daß Gleitlagerelemente mit diesen Lagerlegierungen nicht nur für höhere Gleitgeschwindigkeiten, sondern auch für erhöhte Belastungen eingesetzt werden können. Darüber hinaus konnten die Notlaufeigenschaften des Materials durch die spezielle Ausbildung der Schmieröltaschen erheblich verbessert werden.

Gemäß einer weiteren Ausführungsform kann die Gleitfläche des Lagerwerkstoffs, in den die Schmieröltaschen eingebracht werden, zusätzlich mit einer Galvanikschicht oder Sputterschicht überzogen werden, deren Dicke deutlich geringer ist als die Tiefe der eingebrachten Schmieröltaschen. Ein solcher Überzug kann auf beliebige Lagermaterialien aufgebracht werden, bevorzugt jedoch auf Bleibronze.

Die Schmieröltaschen werden vorzugsweise durch die Galvanikschicht oder Sputterschicht nicht vollständig aufgefüllt. Es bleiben vielmehr die Vertiefungen in der Lauffläche erhalten. Da die Galvanikschicht oder Sputterschicht einen geschlossenen Überzug bildet, wird unabhängig von der Form der Schmieröltaschen ein kontinuierlicher Übergang zwischen den Tragflächen und den Flächen der Schmieröltaschen erzielt. Ausfransungen im Randbereich der Schmieröltaschen, die durch das Einprägen in das Lagermaterial bzw. durch das spanabhebende Bearbeiten der Gleitfläche auftreten können, werden mittels der Galvanikschicht oder Sputterschicht überdeckt und ausgeglichen.

Die Galvanik- oder Sputterschicht kann auch eine größere Dicke aufweisen als die Tiefe T der Schmieröltaschen, wenn gewährleistet wird, daß die Kontur der Galvanik- oder Sputterschicht der Kontur der in die Lagermetallschicht eingebrachten Schmieröltaschen folgt.

Beispielhafte Lagerlegierungen sind wie folgt:

AlNi2MnCu, AlZn5SiCuPbMg, AlSn6, CuPb22Sn, CuPb17Sn5, CuPb10Sn10 oder CuPb22Sn3. Bevorzugte Galvanikschichten bestehen aus PbSn10Cu2, PbSn10Cu5, PbSn14Cu8, auf einer Ni-Zwischenschicht, gegebenenfalls auf einer NiSn-Zwischenschicht. Eine bevorzugte Sputterschicht ist AlSn20.

Die Form der Schmieröltaschen kann beliebig gewählt werden, wobei es sich als vorteilhaft herausgestellt hat, wenn die Schmieröltaschen entweder die Gestalt eines Kugelabschnitts oder Kegelstumpfes aufweisen. Der Flankenwinkel bei kegelstumpfförmigen Schmieröltaschen sollte im Bereich zwischen 30 und 60°, vorzugsweise bei 45° liegen. Über die Flankenneigung kann der Schmierstoffanteil, der durch die Bewegung des Gleitpartners aus den Schmieröltaschen heraus auf den Tragflächenanteil gefördert wird, eingestellt werden. Da der Vorteil der Schmieröltaschen darin liegt, daß sich ein Druck auch im Bereich der Schmieröltaschen aufbaut, ist man bei hohen Belastungen bestrebt, möglichst nur geringe Mengen an Schmieröl aus den Schmieröltaschen während des Betriebs herauszubefördern. Sollen hingegen in erster Linie die Notlaufeigenschaften verbessert werden, sind die größeren Winkel vorzusehen. Es werden daher aus dem Bereich 30 - 60° für den Flankenwinkel a die kleineren Winkel bevorzugt.

Die Schmieröltaschen können gemäß einer weiteren Ausführungsform in Draufsicht die Gestalt einer Raute aufweisen.

Vorzugsweise ist das Gleitlagerelement eine Gleitlagerschale. Die Schmieröltaschen sind bei dieser Ausführungsform vorzugsweise schräg zur Umfangsrichtung auf Linien hintereinander angeordnet, wobei die Umfangslinien mit der Umfangsrichtung einen beliebigen Winkel β vorzugsweise zwischen 15° und 40° bilden. Diese linienartige Anordnung entspricht in etwa der Anordnung von Rillen bei Rillenlagern, wobei allerdings der Winkel β größer gewählt wird.

Die Anordnung der Schmieröltaschen erfolgt vorzugsweise auch schräg zur Achsrichtung auf Linien hintereinander, wobei diese Querlinien mit der Achsrichtung der Lagerschale einen beliebigen Winkel γ vorzugsweise zwischen 5° und 25° bilden. Die Längslinien und Querlinien bilden aufgrund der Winkel β und γ ein rautenförmiges Muster.

Es hat sich gezeigt, daß diese Schmieröltaschenanordnungen deswegen vorteilhafter sind, weil ansonsten eine Abschattungswirkung eintritt, aufgrund derer nicht alle Schmieröltaschen, insbesondere bei dichter Hintereinanderanordnung zur Verbesserung der Laufeigenschaften der Gleitlagerschale beitragen, sondern sogar negativ wirken können.

Eine Hintereinanderanordnung der Schmieröltaschen ist dann nicht nachteilig, wenn der Abstand der in Gleitrichtung, d.h. bei Schalen und Buchsen in Umfangsrichtung, benachbarten Schmieröltaschen mindestens 12mm beträgt.

Die Schmieröltaschen können je nach Anwendungszweck lediglich auf den Scheitelbereich und einen Umfangswinkelbereich δ der Gleitlagerschale oder Buchse von ± 30 bis ± 60° um den Scheitel beschränkt sein.

Beispielhafte Ausführungsformen werden nachfolgend anhand der Zeichnungen näher erläutert.

Es zeigen:
- Figur 1: eine perspektivische Darstellung von Gleitlagerschalen gemäß einer ersten Ausführungsform,
- Figur 2: eine perspektivische Darstellung einer Lagerbuchse,
- Figur 3: einen Schnitt durch die in Figur 1 gezeigte Gleitlagerschale längs der Linie III-III,
- Figur 4A,B: jeweils einen Schnitt durch die in Figur 1 gezeigte Gleitlagerschale längs der Linie IV-IV für zwei unterschiedliche Ausführungsformen,
- Figur 5: eine perspektivische Darstellung einer Gleitlagerschale gemäß einer weiteren Ausführungsform,
- Figur 6A: einen Schnitt durch die in Figur 1 dargestellte Gleitlagerschale längs der Linie VIa-VIa,
- Figur 6B: einen Schnitt durch die in Figur 5 gezeigte Gleitlagerhalbschale längs der Linie VIb-VIb,
- Figur 7A,B: Draufsichten der Abwicklung der Gleitfläche der in Figur 1 gezeigten Gleitlagerschale für zwei unterschiedliche Ausführungsformen,
- Figur 8: eine perspektivische Darstellung eines Bundlagers,
- Figur 9: ein Diagramm, in dem die Drehzahlen im Fall von Mangelschmierung aufgetragen sind und
- Figur 10: ein Diagramm zum Gleitverhalten.

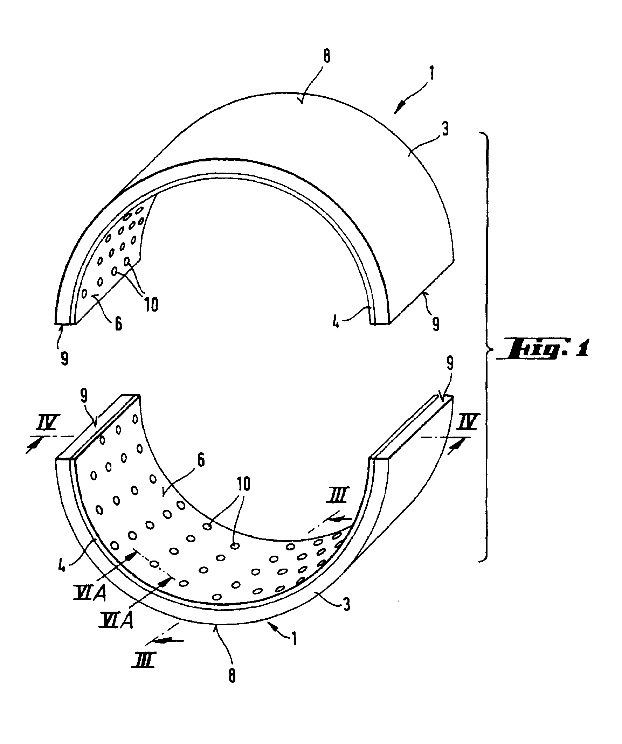

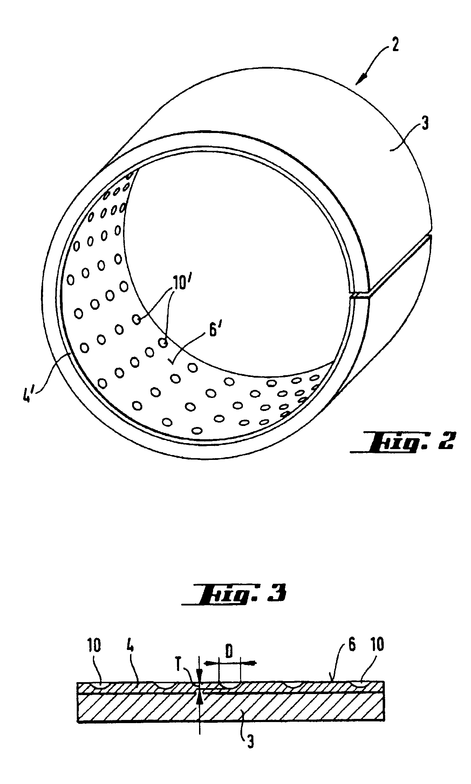

In der Figur 1 sind Gleitlagerschalen 1, die mit ihren Teilfächen 9 aufeinanderliegen und beispielsweise ein Haupt- oder Pleuellager bilden, und in Figur 2 eine Lagerbuchse 2 jeweils perspektivisch dargestellt. Auf den Stahlstützschalen 3 ist jeweils z.B. eine Aluminiumlegierung 4,4' aufgebracht.

In die Oberfläche der Aluminiumlegierung 4,4', die die jeweilige Gleitfläche 6, 6' der Gleitlagerschale 1 bzw. der Lagerbuchse 2 bildet, sind kalottenförmige Vertiefungen als Schmieröltaschen 10, 10' eingeprägt. In den in Figur 1 und 2 gezeigten Ausführungsformen sind die Schmieröltaschen 10, 10' gleichmäßig über die gesamte Gleitfläche 6, 6' der Gleitlagerschale 1 sowie der Lagerbuchse 2 verteilt.

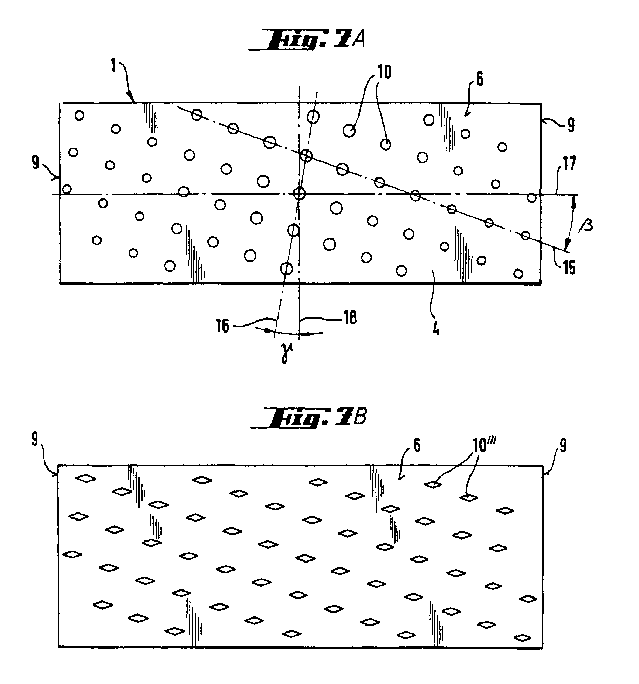

In der Figur 3 ist ein Schnitt längs der Linie III-III durch die in Figur 1 gezeigte Gleitlagerschale 1 dargestellt. Es ist zu sehen, daß die Schmieröltaschen 10 die Gestalt eines Kugelabschnitts aufweisen, der Durchmesser D wesentlich größer ist als die Tiefe T der Schmieröltaschen 10 (s. Figur 6A), die von der Gleitfläche 6 aus gemessen wird. Die Schmieröltaschen 10 befinden sich vollständig im jeweiligen Gleitlagermaterial, d.h. T ist kleiner als die Dicke der Aluminiumlegierung 4. Die Durchmesser D der Schmieröltaschen 10 können im Bereich von etwa 0,5 - 3,5 mm liegen und die Tiefe T, wobei nur diejenigen Durchmesser- und Tiefenwerte miteinander kombiniert werden können, damit das Verhältnis von Taschenfläche zu Taschentiefe von 10-40 mm eingehalten wird. Grundsätzlich ist jede beliebige geometrische Form möglich, wie dies beispielsweise Figur 7B zeigt.

Anordnung und Ausbildung der Schmieröltaschen 10' der Lagerbuchse 2 entsprechen derjenigen gem. Figur 1.

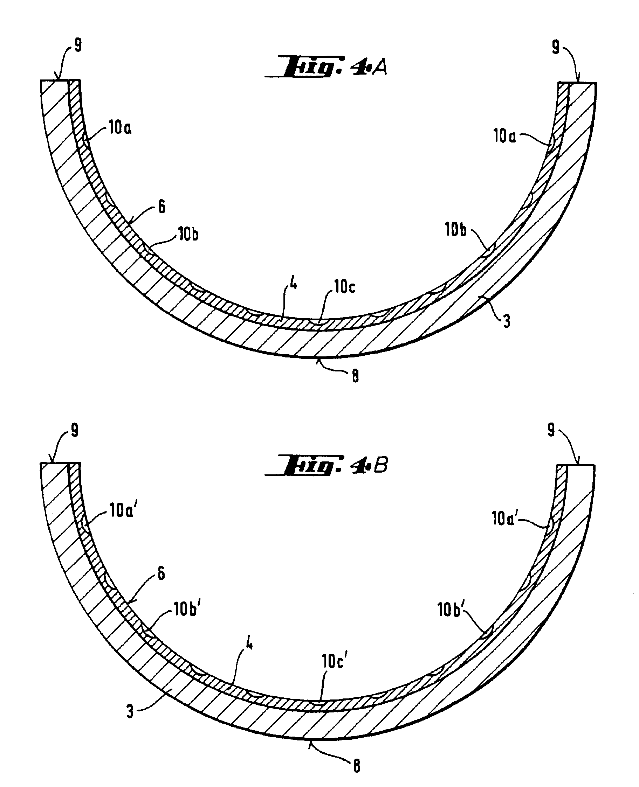

In den Figuren 4A,B ist ein Schnitt längs der Linie IV-IV durch die in Figur 1 gezeigte Gleitlagerschale 1 für zwei Ausführungsformen dargestellt. Die Schmieröltaschen besitzen unterschiedliche Tiefen, wobei die Tiefe in der in Figur 4A gezeigten Ausführungsform vom Scheitel 8 zu den Teilflächen 9 hin kontinuierlich abnimmt. So weisen die Schmieröltaschen 10a im Bereich der Teilflächen nur noch etwa die halbe Tiefe gegenüber den Schmieröltaschen 10c im Bereich des Scheitels 8 der Gleitlagerhalbschale 1 auf. Die Schmieröltaschen 10b im Übergangsbereich haben dagegen eine Tiefe, die in etwa zwischen der der Schmieröltaschen 10c und der der Schmieröltaschen 10a liegt. Der Schnitt IV-IV der Figur 4B zeigt die Tiefenausbildung der Schmieröltaschen 10a',b',c' in umgekehrter Anordnung wie in Figur 4A. Wie dargestellt, weist die Schmieröltasche 10c' im Scheitel 8 die geringste Tiefe auf, wobei die Tiefe der Schmieröltaschen 10b' und 10a' zu den Teilflächen 9 hin zunimmt.

Anordnung und Ausbildung der Schmieröltaschen 10a,b,c bzw. 10a', 10b', 10c' sind auf die Lagerbuchse 2 gemäß Figur 2 übertragbar.

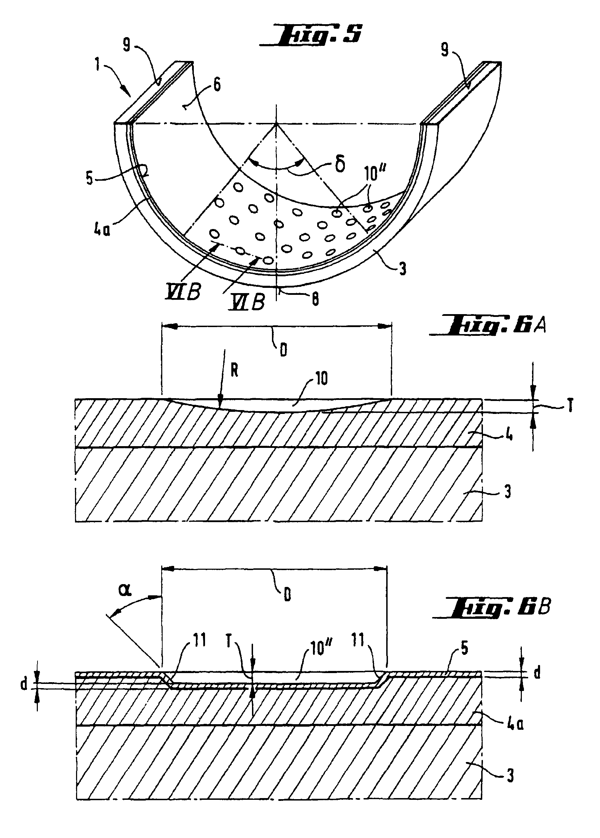

In der Figur 5 ist eine weitere Ausführungsform einer Gleitlagerschale 1 dargestellt, bei der die Schmieröltaschen 10" lediglich in einem Umfangswinkelbereich von δ = ± 45° im Bereich des Scheitels 8 angeordnet sind. Dies ist der Bereich der größten Lagerbelastung bzw. der kleinsten Schmierfilmdicken. Vom Aufbau unterscheidet sich die Gleitlagerschale 1 in Figur 5 von derjenigen in Figur 1 dadurch, daß auf der Stahlstützschale 3 zunächst eine Bleibronze 4a aufgebracht ist, die mit einer Galvanikschicht 5 oder Sputterschicht vollständig überdeckt ist.

Figur 6A zeigt im Schnitt Vla-Vla durch die Gleitlagerschale 1 gemäß Figur 1 Schmieröltaschen 10 in Gestalt eines Kugelabschnittes.

Figur 6B zeigt im Schnitt Vlb-Vlb durch die Gleitlagerschale 1 gemäß Figur 5 kegelstumpfförmige Schmieröltaschen 10", deren Flanken 11 mit der Senkrechten einen Winkel a von etwa 45° bilden. Die Schmieröltaschen 10" sind in die Bleibronze 4a eingeprägt, wobei die Galvanikschicht 5 überall die gleiche Dicke d auch im Bereich der Schmieröltaschen aufweist. Die Schmieröltaschen 10" sind somit vollständig ausgekleidet, haben aber die gleiche Tiefe wie vor dem Galvanisieren, wobei die Dicke d der Galvanikschicht 5 geringer ist als die Tiefe T der in die Bleibronze wird in Abhängigkeit vom Schmierstoff gemäß Anspruch 1 gewählt, 4a eingeprägten Schmieröltaschen 10", was jedoch nicht grundsätzlich der Fall sein muß. Hierbei muß sichergestellt sein, daß die Schmieröltaschen nach wie vor offen zur Aufnahme des Schmieröls sind.

In der Figur 7A ist die Draufsicht der abgewickelten Gleitfläche 6 der in Figur 1 gezeigten Gleitlagerschale 1 dargestellt. Die Schmieröltaschen 10 sind auf Längslinien 15 hintereinander angeordnet, wobei die Längslinien 15 mit der Umfangsrichtung 17 einen Winkel β bilden, der etwa 30° beträgt. Außerdem sind die Schmieröltaschen auch auf Querlinien 16 angeordnet, die mit der Achsrichtung 18 einen Winkel γ von 15° bilden. Aufgrund dieser Winkelanordnung wird gewährleistet, daß der Abstand der Schmieröltaschen in Umfangsrichtung 17 mindestens 12mm beträgt.

Figur 7B zeigt ähnlich wie Figur 7A die Abwicklung einer Gleitfläche 6 mit in Draufsicht rautenförmigen Schmieröltaschen 10"'.

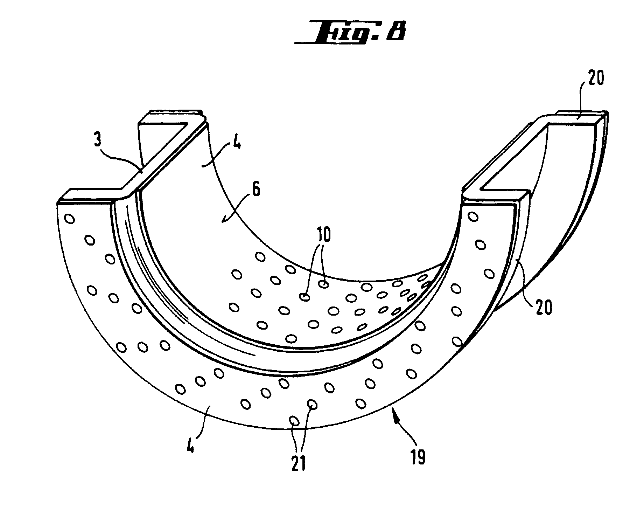

Figur 8 zeigt in perspektivischer Darstellung ein Bundlager 19. Wie ersichtlich, sind die Bunde 20 ebenfalls mit Schmieröltaschen 21 versehen, wobei Anordnung und Ausbildung der Schmieröltaschen 21 mit den vorher beschriebenen Schmieröltaschen vergleichbar sind.

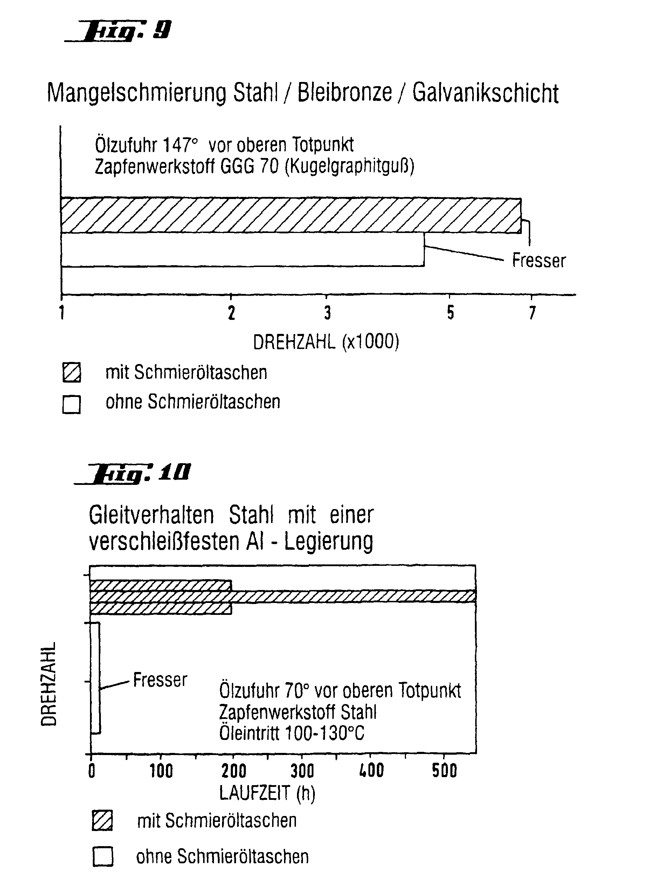

Die Figuren 9 und 10 zeigen Vergleichsversuche.

In der Figur 9 ist die maximale Drehzahl aufgetragen, die im Fall von Mangelschmierung bei Gleitlagern mit und ohne Schmieröltaschen bis zum Fressen erreicht wird. Es wurden Lagerschalen aus Stahl mit einer Lagerlegierung aus Bleibronze mit Galvanikschicht untersucht. Die Lagerschale mit Schmieröltaschen wies folgende Spezifikation auf:

| | |
|---|---|
| Taschentiefe | 0.08mm |
| Verhältnis Taschenfläche zu Taschentiefe | 22mm |
| Gesamtfläche aller Schmieröltaschen | 45mm² = 3% der gesamten Gleitfläche |
| β | 21° |
| γ | 10° |

Bei diesem Versuch waren die Schmieröltaschen über die gesamte Gleitfläche gleichmäßig verteilt, wobei sämtliche Schmieröltaschen dieselbe Tiefe T aufwiesen. Die Viskosität des Schmieröls betrug η = 3 mPas.

Das Diagramm der Figur 9 zeigt, daß mit einem erfindungsgemäßen Lager bei Mangelschmierung deutlich höhere Drehzahlen möglich waren, bis Fresser auftraten.

Im Balkendiagramm der Figur 10 ist das Gleitverhalten von Lagerschalen aus Stahl mit einer Gleitschicht aus einer Aluminiumlegierung anhand von 15 Versuchen mit Gleitlagerschalen ohne Schmieröltaschen aufgetragen. Bei allen Lagerschalen traten nach längstens 10h Fresser auf. Ferner wurden 10 Versuche mit Gleitlagerschalen gleicher Legierung aber mit Schmieröltaschen bei erhöhten Drehzahlen durchgeführt, wovon neun Versuche über 200h und ein Versuch über 500h lief. Alle Versuche wurden nach Erreichen der Versuchsdauer ohne Schäden beendet. Die Ausbildung der Schmieröltaschen entsprach derjenigen wie beim Versuch gemäß Figur 9.

### Bezugszeichen

- 1: Gleitlagerschale
- 2: Lagerbuchse
- 3: Stahlstützschale
- 4: Aluminiumlegierung
- 4a: Bleibronzeschicht
- 5: Galvanikschicht
- 6,6': Gleitfläche
- 8: Scheitel
- 9: Teilfläche
- 10,10',10'',10"': Schmieröltasche
- 10a,b,c, 10a',b',c': Schmieröltasche
- 11: Flanke
- 15: Längslinie
- 16: Querlinie
- 17: Umfangsrichtung
- 18: Achsrichtung
- 19: Bundlager
- 20: Bund
- 21: Schmieröltasche

## Patentansprüche

1. Verwendung einer geschmierten Gleitlagerschale, eines geschmierten, geteilten Bundlagers oder einer geschmierten Anlaufscheibe als Haupt- und/oder Pleuellagerelement in Kolbenmaschinen, insbesondere in Verbrennungsmotoren, die oder das einen einschichtigen oder mehrschichtigen, metallischen Lagerwerkstoff aufweist, , wobei
die Gleitfläche Schmieröltaschen aufweist, und der Schmierstoff mit einer dynamischen Betriebsviskosität η von 1,8 bis 50 mPas und
die Tiefe T der Schmieröltaschen (10,10",10"', 10a,b,c,10a',b',c',21) in mm im Bereich T = 0,5 e^{a} bis 1.e^{a} liegt, wobei a = 0,45 . 1nη - 3 ist, und
wobei das Verhältnis von Taschenfläche zu Taschentiefe 10 - 40mm beträgt.

2. Verwendung nach Anspruch 1, **dadurch gekennzeichnet, daß** die Fläche aller Schmieröltaschen (10,10", 10"',10a,b,c,10a',b',c',21) maximal 10% der gesamten Gleitfläche (6,6') beträgt.

3. Verwendung nach einem der Ansprüche 1 oder 2, **dadurch gekennzeichnet, daß** die Schmieröltaschen (10,10",
10"', 10a,b,c, 10a',b',c',21) unterschiedliche Tiefen T aufweisen.

4. Verwendung nach Anspruch 3, **dadurch gekennzeichnet, daß** die Schmieröltaschen (10a,b,c) im Bereich der größten Belastung bzw. kleinsten Schmierfilmdicke die größte Tiefe aufweisen und
daß die Tiefen zu den Bereichen geringerer Belastung bzw. zunehmender Schmierfilmdicken kontinuierlich abnehmen.

5. Verwendung nach Anspruch 3, **dadurch gekennzeichnet, daß** die Schmieröltaschen (10a',b',c') im Bereich der geringsten Belastung die größte Tiefe aufweisen und daß die Tiefen zu den Bereichen größerer Belastung kontinuierlich abnehmen.

6. Verwendung nach einem der Ansprüche 1 bis 5, **dadurch gekennzeichnet, daß** die Schmieröltaschen (10,10",10"',10a,b,c,10a',b',c',21) eingeprägt sind.

7. Verwendung nach einem der Ansprüche 1 bis 6, **dadurch gekennzeichnet, daß** der Lagerwerkstoff eine Aluminium-Legierung (4,4') ist, in welche die Schmieröltaschen (10,10",10"', 10a,b,c, 10a',b',c',21) eingebracht sind.

8. Verwendung nach einem der Ansprüche 1 bis 7, **dadurch gekennzeichnet, daß** die Gleitfläche (6.6') einschließlich der Schmieröltaschen (10,10",10"',10a,b,c,10a',b',c',21) mit einer Galvanikschicht (5) oder einer Sputterschicht überzogen ist.

9. Verwendung nach Anspruch 8, **dadurch gekennzeichnet, daß** die Dicke d der Galvanikschicht (5) oder der Sputterschicht geringer ist als die Tiefe T der eingebrachten Schmieröltaschen (10,10",10"',10a,b,c,10a',b',c',21).

10. Verwendung nach Anspruch 8, **dadurch gekennzeichnet, daß** die Dicke d der Galvanikschicht (5) oder der Sputterschicht größer ist als die Tiefe T der Schmieröltaschen (10,10",10"',10a,b,c,10a',b',c',21) und daß die Kontur der Galvanikschicht (5) oder der Sputterschicht (5) der Kontur der in die Lagermetallschicht eingebrachten Schmieröltaschen (10,10",10"',10a,b,c,10a',b',c',21) folgt.

11. Verwendung nach einem der Ansprüche 1 bis 10, **dadurch gekennzeichnet, daß** die Schmieröltaschen (10, 10a,b,c, 10a'b',c') die Gestalt eines Kugelabschnitts aufweisen.

12. Verwendung nach einem der Ansprüche 1 bis 10, **dadurch gekennzeichnet, daß** die Schmieröltaschen (10") die Gestalt eines Kegelstumpfes aufweisen.

13. Verwendung nach Anspruch 12, **dadurch gekennzeichnet, daß** der Flankenwinkel α der kegelstumpfförmigen Schmieröltaschen (10") 30 - 60° beträgt.

14. Verwendung nach einem der Ansprüche 1 bis 10, **dadurch gekennzeichnet, daß** die Schmieröltaschen (10"') in Draufsicht die Gestalt einer Raute aufweisen.

15. Verwendung einer Gleitlagerschale nach einem der Ansprüche 1 bis 14,
**dadurch gekennzeichnet,**
**daß** die Schmieröltaschen (10) auf Längslinien (15) hintereinander angeordnet sind, die mit der Umfangsrichtung (17) einen Winkel β zwischen 15° und 40° einnehmen.

16. Verwendung nach Anspruch 15, **dadurch gekennzeichnet, daß** die Schmieröltaschen (10) auf Querlinien (16) hintereinander angeordnet sind, die mit der Achsrichtung (18) einen Winkel γ zwischen 5° und 25° einnehmen.

17. Verwendung nach einem der Ansprüche 1 bis 16, **dadurch gekennzeichnet, daß** die Schmieröltaschen (10) auf Längslinien (15) und Querlinien (16) angeordnet sind, wobei der Abstand von in Gleitrichtung benachbarten Schmieröltaschen (10) mindestens 12mm beträgt.

18. Verwendung nach einem der Ansprüche 15 bis 17, **dadurch gekennzeichnet, daß** die Schmieröltaschen (10") in einem Umfangswinkelbereich δ von ± 30° bis ± 60° um den Scheitel (8) angeordnet sind.

## Claims

1. A use of a lubricated half bearing, a lubricated, divided collar bearing or a lubricated thrust washer as main and/or connecting rod bearing element in piston machines, in particular in internal combustion engines, which has a monolayer or multilayer, metallic bearing material, whereby
the sliding surface has lubricating oil pockets, and the lubricant with a dynamic operating viscosity η is from 1.8 to 50 mPas and the depth T of the lubricating oil pockets (10, 10", 10"', 10a, b, c, 10a', b', c', 21) in mm is in the range T = 0.5 e^{a} to 1.e^{a}, whereby a = 0.45. In η - 3, and whereby
the ratio of pocket surface to pocket depth is 10 to 40 mm.

2. The use as claimed in Claim 1, **characterised in that** the surface of all lubricating oil pockets (10, 10", 10"', 10a, b, c, 10a', b', c', 21) is a maximum 10% of the entire sliding surface (6.6').

3. The use as claimed in any one of Claims 1 or 2, **characterised in that** the lubricating oil pockets (10, 10", 10"', 10a, b, c, 10a', b', c', 21) have different depths T.

4. The use as claimed in Claim 3, **characterised in that** the lubricating oil pockets (10a, b, c) exhibit the greatest depth in the region of the greatest load or the least lubricant film thickness, and
**in that** the depths decrease continuously to the regions of least load or increasing lubricant film thickness.

5. The use as claimed in Claim 3, **characterised in that** the lubricating oil pockets (10a', b', c') have the greatest depth in the region of the least load, and **in that** the depths decrease continuously to the regions of greater load.

6. The use as claimed in any one of Claims 1 to 5, **characterised in that** the lubricating oil pockets (10, 10", 10"', 10a, b, c, 10a', b', c', 21) are impressed.

7. The use as claimed in any one of Claims 1 to 6, **characterised in that** the bearing material is an aluminium alloy (4, 4'), in which the lubricating oil pockets (10, 10", 10", 10a, b, c, 10a', b', c', 2a) are placed.

8. The use as claimed in any one of Claims 1 to 7, **characterised in that** the sliding surface (6, 6') including the lubricating oil pockets (10, 10", 10"', 10a, b, c, 10a'. b', c', 21) is coated with a galvanic layer (5) or a sputter layer.

9. The use as claimed in Claim 8, **characterised in that** the thickness d of the galvanic layer (5) or of the sputter layer is less than the depth T of the built-in lubricating oil pockets (10, 10", 10"', 10a, b, c, 10a', b', c', 21).

10. The use as claimed in Claim 8, **characterised in that** the thickness d of the galvanic layer (5) or of the sputter layer is greater than the depth T of the lubricating oil pockets (10, 10", 10"', 10a, b, c, 10a', b', c', 21), and **in that** the contour of the galvanic layer (3) or of the sputter layer (5) follows the contour of the lubricating oil pockets (10, 10", 10"', 10a, b, c, 10a', b', c', 21) placed in the bearing metal layer.

11. The use as claimed in any one of Claims 1 to 10, **characterised in that** the lubricating oil pockets (10, 10a, b, c, 10a', b', c') have the shape of a spherical section.

12. The use as claimed in any one of Claims 1 to 10, **characterised in that** the lubricating oil pockets (10") have the shape of a truncated cone.

13. The use as claimed in Claim 12, **characterised in that** the flank angle α of the truncated lubricating oil pockets (14") is 30 to 60°.

14. The use as claimed in any one of Claims 1 to 10, **characterised in that** the lubricating oil pockets (10'") have the shape of a lozenge in plan view.

15. The use of a half bearing as claimed in any one of Claims 1 to 14, **characterised in that**
the lubricating oil pockets (10) are arranged successively on longitudinal lines (15), which assume an angle β between 15° and 40° in the peripheral direction (17).

16. The use as claimed in Claim 15, **characterised in that** the lubricating oil pockets (10) are arranged successively on transverse lines (16), which (18) assume an angle γ between 5° and 25° in the axial direction.

17. The use as claimed in any one of Claims 1 to 16, **characterised in that** the lubricating oil pockets (10) are arranged on longitudinal lines (15) and transverse lines (16), whereby the distance from adjacent lubricating oil pockets (10) in the sliding direction is at least 12mm.

18. The use as claimed in any one of Claims 15 to 17, **characterised in that** the lubricating oil pockets (10") are arranged in an angle at circumference range δ of ± 30° to ± 60° around the apex (8).

## Revendications

1. Utilisation d'un coussinet à glissement lubrifié, d'un palier à collet lubrifié et divisé ou d'une rondelle de démarrage lubrifiée en tant qu'élément de palier principal et/ou de bielle dans des machines alternatives, notamment des moteurs à combustion, qui présente un matériau de palier métallique monocouche ou multicouche,
la surface de glissement présentant des poches de lubrifiant et le lubrifiant une viscosité de fonctionnement η de 1,8 à 50 mPas et la profondeur T des poches de lubrifiant (10, 10", 10"', 10a,b,c, 10a',b',c', 21) en mm se situant dans la plage T = 0,5 e^{a} à 1.e^{a}, sachant que a = 0,45 . In η - 3, et
le rapport entre la surface de la poche et la profondeur de la poche étant de 10 à 40 mm.

2. Utilisation selon la revendication 1, **caractérisée en ce que** la surface de toutes les poches de lubrifiant (10, 10", 10"', 10a,b,c, 10a',b',c', 21) est d'au maximum 10 % de la surface de glissement totale (6, 6').

3. Utilisation selon l'une quelconque des revendications 1 ou 2, **caractérisée en ce que** les poches de lubrifiant (10, 10", 10"', 10a,b,c, 1 0a',b',c', 21) présentent différentes profondeurs T.

4. Utilisation selon la revendication 3, **caractérisée en ce que** les poches de lubrifiant (10a,b,c) présentent leur plus grande profondeur dans la zone de la plus grande charge ou de la plus petite épaisseur de film lubrifiant et
que les profondeurs diminuent en continu en direction des zones de charge plus faible ou d'épaisseur de film de lubrifiant croissante.

5. Utilisation selon la revendication 3, **caractérisée en ce que** les poches de lubrifiant ( 10a',b',c') présentent la plus grande profondeur dans la zone de la plus faible charge et que les profondeurs diminuent en continu en direction des zones de charge plus grande.

6. Utilisation selon l'une quelconque des revendications 1 à 5, **caractérisée en ce que** les poches de lubrifiant (10, 10", 10"', 10a,b,c, 10a',b',c', 21) sont gravées.

7. Utilisation selon l'une quelconque des revendications 1 à 6, **caractérisée en ce que** le matériau du palier est un alliage d'aluminium (4, 4') dans lequel les poches de lubrifiant (10, 10", 10"', 10a,b,c, 10a',b',c', 21) sont intégrées.

8. Utilisation selon l'une quelconque des revendications 1 à 7, **caractérisée en ce que** la surface de glissement (6, 6'), y compris les poches de lubrifiant (10, 10", 10"', 10a,b,c, 10a',b',c', 21) est enrobée d'une couche galvanique (5) ou d'une couche rugosifiée par projection.

9. Utilisation selon la revendication 8, **caractérisée en ce que** l'épaisseur d de la couche galvanique (5) ou de la couche rugosifiée par projection est inférieure à la profondeur T des poches de lubrifiant intégrées (10, 10", 10"', 10a,b,c, 10a',b',c', 21).

10. Utilisation selon la revendication 8, **caractérisée en ce que** l'épaisseur d de la couche galvanique (5) ou de la couche rugosifiée par projection est supérieure à la profondeur T des poches de lubrifiant (10, 10", 10"', 10a, b,c, 10a',b',c', 21) et que le contour de la couche galvanique (5) ou de la couche rugosifiée par projection (5) suit le contour des poches de lubrifiant lubrifiant (10, 10", 10"', 10a,b,c, 10a',b',c', 21) intégrées dans la couche métallique du palier.

11. Utilisation selon l'une quelconque des revendications 1 à 10, **caractérisée en ce que** les poches de lubrifiant (10, 10a,b,c, 10a',b',c') présentent la forme d'une section de sphère.

12. Utilisation selon l'une quelconque des revendications 1 à 10, **caractérisée en ce que** les poches de lubrifiant (10") présentent la forme d'un tronconique.

13. Utilisation selon la revendication 12, **caractérisée en ce que** l'angle de flanc α des poches de lubrifiants en forme de tronconique (10") est de 30 à 60°.

14. Utilisation selon l'une quelconque des revendications **1** à 10, **caractérisée en ce que** les poches de lubrifiant (10") présentent, en vue du dessus, la forme d'un losange.

15. Utilisation d'un coussinet à glissement selon l'une quelconque des revendications 1 à 14, **caractérisée en ce que**
les poches de lubrifiant (10) sont disposées les unes derrière les autres sur des lignes longitudinales (15) qui décrivent avec le sens circonférentiel (17) un angle β allant de 15° à 40°.

16. Utilisation selon la revendication 15, **caractérisée en ce que** les poches de lubrifiant (10) sont disposées les unes derrière les autres sur des lignes transversales (16) qui décrivent avec le sens de l'axe (18) un angle γ allant de 5° à 25°.

17. Utilisation d'un coussinet à glissement selon l'une quelconque des revendications 1 à 16, **caractérisée en ce que** les poches de lubrifiant (10) sont disposées sur des lignes longitudinales (15) et des lignes transversales (16), la distance entre les poches de lubrifiant (10) voisines dans le sens de glissement étant d'au moins 12 mm.

18. Utilisation d'un coussinet à glissement selon l'une quelconque des revendications 15 à 17, **caractérisée en ce que** les poches de lubrifiant (10") sont disposées dans une zone d'angle circonférentiel δ allant de ± 30° à ± 60° autour du sommet (8).
